(19) Europäisches Patentamt

European Patent Office

Office européen des brevets

(11) EP 0 826 967 A1

## (12) EUROPEAN PATENT APPLICATION

(43) Date of publication:
04.03.1998 Bulletin 1998/10

(51) Int. Cl.$^6$: G01P 1/00, G01P 15/12

(21) Application number: 96830459.2

(22) Date of filing: 02.09.1996

(84) Designated Contracting States:
DE FR GB IT

(71) Applicant:
SGS-THOMSON MICROELECTRONICS s.r.l.
20041 Agrate Brianza (Milano) (IT)

(72) Inventors:
• Ferrari, Paolo
21013 Gallarate, Varese (IT)

• Vigna, Benedetto
85100 Potenza (IT)

(74) Representative:
Maggioni, Claudio et al
c/o JACOBACCI & PERANI S.p.A.
Via Visconti di Modrone, 7
20122 Milano (IT)

(54) Semiconductor acceleration sensor

(57) An acceleration sensor is described which is formed on a substrate (10) of p-type silicon. It includes a flexible element (13) of polycrystalline silicon anchored like a beam so as to be cantilevered from the substrate and two n-type surface regions formed in the substrate. The beam (13) has an end portion (14) facing the zone separating the two regions. These latter consti- tute the source and drain regions of an insulated-gate field-effect transistor and the beam (13) constitutes the gate electrode of the same transistor. When the struc- ture is subjected to an acceleration, the beam bends so as to vary the thickness of the gate dielectric and hence modify the threshold voltage of the transistor.

FIG. 3

EP 0 826 967 A1

## Description

The present invention relates to devices for converting an acceleration into an electrical magnitude and, more particularly, to an acceleration sensor as defined in the preamble to Claim 1.

Acceleration sensors are used in many fields of technology, for example in the motor vehicle industry where they are used to control various devices such as air bags, ABS braking systems, active suspensions, inertial orientation systems and several engine parts.

Various types of acceleration sensor are known which differ from each other in their construction and principle of operation. In recent years, alongside conventional sensors made on the macroscopic scale and constituted essentially by mechanical switches sensitive to acceleration, microscopic sensors have been devised and realised which are based on substrates of semiconductive material and are formed, in many cases, together with the circuits and electronic components necessary for the amplification and processing of the signal produced thereby. These latter sensors have many advantages over conventional ones, as well as the obvious one of smaller bulk: low cost, great reliability, improved signal/noise ratio, integrability with processing and memory devices, better reproducibility, etc.

The methods of manufacture of sensors on a semiconductive substrate, typically silicon, are based on the working of both faces of a wafer of semiconductive material, essentially by means of bulk micromachining, or on the working of only one face of a wafer of semiconductive material by deposition and selective removal of thin films and surface micromachining. This latter type of working is particularly suitable for integration of the structure of the sensor with the processing circuits.

With regard to the operation of sensors on semiconductive substrates, this is based on the effect of the acceleration on a structure which has a mass, so-called seismic mass, anchored to the substrate by a mechanical suspension element. The seismic mass is subject to an inertial force when it is subjected to an acceleration and hence moves relative to the substrate, causing stress in the suspension element. The movement and/or stress are converted into an electrical signal which is then amplified and processed as necessary.

In a known sensor, the seismic mass constitutes an electrode of a capacitor, the second electrode of which is in the semiconductive substrate. A movement of the seismic mass causes a variation in the capacitance of the capacitor which in turn is detected and processed by a suitable circuit.

The object of the invention is to provide a sensor of the type which can be made by surface micromachining, the operation of which is based on the effect of an inertial force on a flexible element anchored so as to be cantilevered from the substrate and which lends itself to be made easily by techniques compatible with the usual industrial processes for the manufacture of integrated circuits, and which is both very small and capable of producing an analog signal.

This object is achieved by the acceleration sensor defined in Claim 1.

The invention will be better understood from the following detailed description of one embodiment thereof, given by way of non-limitative example, made in relation to the appended drawings, in which:

Figures 1 to 3 show schematically the structure of an acceleration sensor according to the invention, in cross-section, in plan and in longitudinal section respectively,

Figures 4-11 are sectional views showing a portion of a substrate of semiconductive material including an acceleration sensor according to the invention in various stages of manufacture.

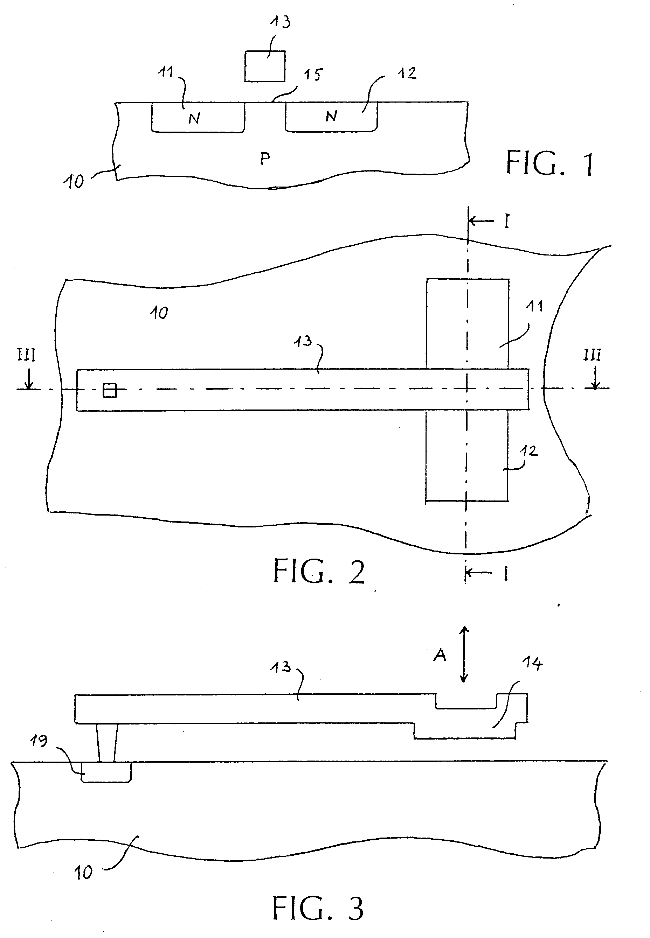

With reference first to Figures 1-3, the sensor is constituted essentially by an insulated-gate field-effect transistor of MOS type formed on a substrate 10, preferably silicon, having a first type of conductivity. Two regions of a second type of conductivity, indicated 11 and 12, are formed on the surface of the substrate 10. An elongate flexible element indicated 13, of electrically-conductive material, is anchored by one end to the substrate 10 while its opposite end portion 14 faces that zone of the substrate which separates the two regions 11 and 12. These latter constitute the source and drain regions of a MOS transistor, the area 15 separating them defining the channel of the transistor and the electrically-conductive element constituting the gate electrode.

In the embodiment shown, the flexible element 13 is shaped so that its end portion 14 is a shorter distance from the substrate than the rest of the element. In another embodiment, not shown, the flexible element 13 is shaped so that its end portion 14 has a larger section than the rest of the element itself so that it has a larger mass and thus increases the sensitivity of the sensor.

Suitable electrodes, not shown since they are conventional, form electrical contacts with the source and drain regions and suitable electrically-conductive tracks, also conventional, enable the source, drain and gate electrodes to be connected to polarising sources and to a processing circuit (not shown).

The flexible element 13, preferably of polycrystalline silicon, but which can also be made of metal, is adapted to bend like a cantilevered beam as a result of an accelerated movement of the structure in the direction indicated by the arrow A in Figure 3. The thickness of the gate dielectric, preferably air or nitrogen, may vary in dependence on the acceleration to which the structure is subjected, particularly the acceleration to which the end portion 14 of the flexible element is subjected.

If the transistor is polarised appropriately, the variation in thickness of the dielectric induces a corresponding variation in the threshold voltage of the transistor and hence modualtes the current which flows in the channel in a continuous manner. An analog signal is thus obtained which gives a measure of the acceleration.

In analytical form, the operation of the sensor may be described as follows.

The bending D of the end portion 14 of the flexible element 13 induced by the acceleration A may be represented by

$$D = F(l,t,b,E) . A$$

where F is a multiplication factor which is a function of the Young's modulus E of the polycrystalline silicon which constitutes the flexible element 13 and of the geometry thereof (l = length, t = thickness, b = width).

The variation in the gate capacitance Co as a result of the bending D makes the threshold voltage Vt of the transistor vary according to the known formula

$$Vt = K + G/Co$$

where K and G are constants independent of the air thickness.

The variation in the threshold voltage makes the drain current Id vary in accordance with the quadratic equation.

$$Id = T (Vg - Vt)^2$$

where Vg is the voltage of the gate relative to the source and T is a constant for the purposes of the operation of the sensor.

The sensitivity S of the sensor is expressed by the following derivative product.

$$S = \frac{\partial Id}{\partial Vt} \cdot \frac{\partial Vt}{\partial D} \cdot \frac{\partial D}{\partial A}$$

The final derivative of the product clearly displays the importance of the geometry of the flexible element, particularly its end portion 14, to the sensitivity of the sensor.

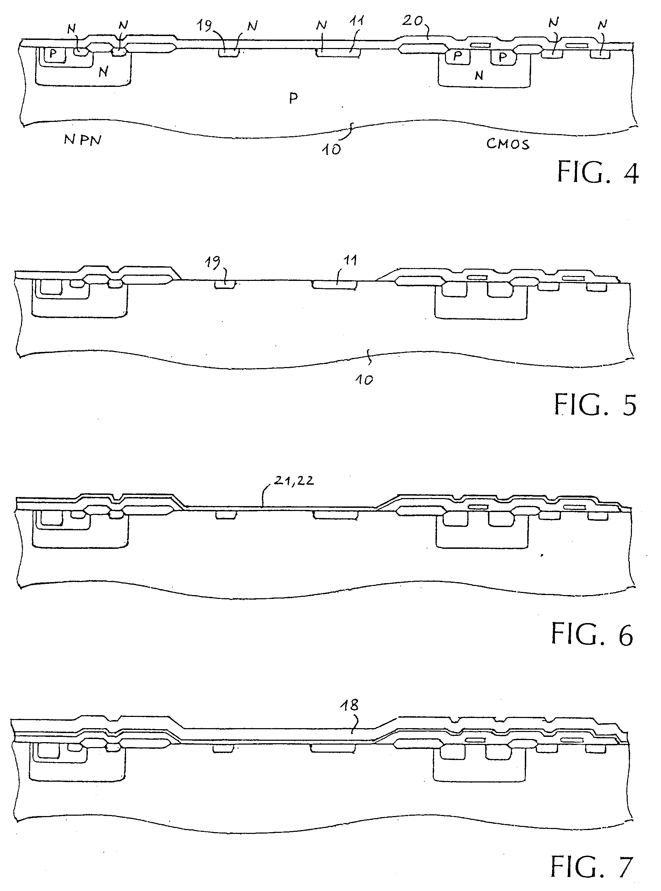

In order to manufacture a sensor according to the invention, one starts with a substrate constituted by a single crystal of silicon having a first conductivity type, p in this example, in which the circuits necessary for amplifying and for processing the signal generated by the sensor have been formed by known techniques for manufacturing monolithic integrated circuits. To represent these circuits, which are known per se, Figures 4-11 show only the sections of a bipolar transistor (NPN) and a pair of complementary MOS transistors (CMOS).

Figure 4 shows the substrate 10 as it appears in the manufacturing step immediately after the deposition of a dielectric layer 20 (typically silicon dioxide) which serves to separate the circuit elements of polycrystalline silicon, for example the gates of the CMOS transistors, from the metals which will be formed in a subsequent step in the process.

With regard to the formation of the sensor, the source and drain regions 11 and 12, in this case of n-type, and a region 19, also of n-type intended to establish an electrical contact and a connection between the flexible element, or beam, 13 and the signal processing circuits, are formed before the deposition of the dielectric layer 20.

The dielectric layer 20 is removed, for example by the usual method of chemical etching, from an area of the substrate intended as the sensor, as shown in Figure 5, and two thin layers 21 and 22 of silicon dioxide and silicon nitride respectively are subsequently deposited over the entire substrate as shown in Figure 6. I t should be noted that the layers 21 and 22 are shown as a single layer so as not to complicate the drawings needlessly.

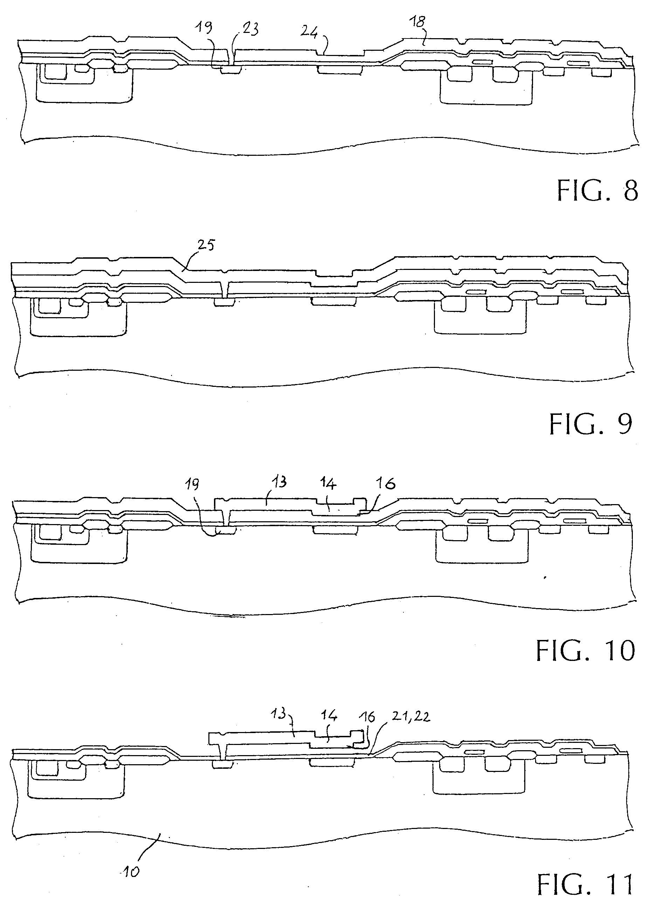

A relatively thick layer 18 of silicon dioxide is then deposited (Figure 7), by a deposition process at about 900°C, and then subjected to selective chemical etching to form an aperture 23 in correspondence with the contact region 19 and a recess 24 in correspondence with the channel separating the source and drain regions, as shown in Figure 8.

A layer 25 of polycrystalline silicon having a thickness of 1-2$\mu$m, is deposited (Figure 9)and then removed selectively (Figure 10) so as to form the beam 13. This is in electrical contact with the region 19, where its point of anchorage to the substrate 10 is also formed, while its other end has a portion 14 with a projection 16 which reduces its distance from the substrate.

Finally, the structure is subjected to surface micromachining (etching), for example with hydrofluoric acid, to remove the layer of silicon dioxide completely. It is noted that this working step is rendered possible by the fact that the layer 22 of silicon nitride is practically unaffected by the hydrofluoric acid.

The structure shown in Figure 11 is thus obtained and comprises an acceleration sensor entirely similar to that of Figures 1 to 3 with the sole difference that its gate dielectric includes a thin layer of silicon dioxide 21 in contact with the substrate 10 and a thin layer of silicon nitride 22 over the layer 21 as well as the layer of air.

The structure is then encapsulated hermetically by conventional techniques in a metal casing. This step may be carried out in air or in nitrogen, preferably at a pressure below atmospheric.

## Claims

1. An acceleration sensor formed on a substrate of semiconductive material (10) of a first conductivity type (p) and including an elongate flexible element (13) of electrically-conductive material anchored to the substrate (10) so as to be cantilevered therefrom and having an end portion (14) whose distance from the substrate can vary in dependence on the acceleration to which it is subject, characterised in that it includes two regions (11,12) of a second conductivity type (n) formed on the surface of the substrate (10) and separated from each other by a zone in the form of a channel and in that the end portion (14) is located facing the channel, the two regions (11, 12) and the flexible element (13) respectively constituting the source and drain regions and the gate electrode of an insulated-gate field-effect transistor.

2. An acceleration sensor according to Claim 1, in which the flexible element (13) is in the form of a beam anchored to the substrate (10) by one end, the said end portion (14) being the other end of the flexible element (13).

3. An acceleration sensor according to Claim 1 or Claim 2, in which the end portion (14) has a larger section than the rest of the flexible element (13).

4. An acceleration sensor according to any one of the preceding claims, in which the flexible element (13) is shaped so that the end portion (14) is a shorter distance from the substrate than the rest of the flexible element (13).

5. An acceleration sensor according to any one of the preceding claims, in which the flexible element (13) is of polycrystalline silicon.

6. An acceleration sensor according to any one of the preceding Claims 1 to 4, in which the flexible element (13) is of metal.

7. An acceleration sensor according to any one of the preceding claims, in which the insulated-gate field-effect transistor has a gate dielectric comprising air.

8. An acceleration sensor according to any one of the preceding Claims 1 to 6, in which the insulated-gate field-effect transistor has a gate dielectric comprising nitrogen.

9. A device for converting an acceleration into an electrical magnitude comprising an acceleration sensor according to any one of the preceding claims and processing circuits formed in the same substrate of semiconductive material as that on which the sensor is formed.

FIG. 1

FIG. 2

FIG. 3

FIG. 4

FIG. 5

FIG. 6

FIG. 7

FIG. 8

FIG. 9

FIG. 10

FIG. 11

**European Patent Office**

# EUROPEAN SEARCH REPORT

Application Number

EP 96 83 0459

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 43 39 190 A (NIPPONDENSO CO., LTD.)<br><br>* page 4, line 40 - page 5, line 8 *<br>* page 6, line 62-64 *<br>* page 19, line 7-8; figure 3 *<br>--- | 1,2,5-7,9 | G01P1/00<br>G01P15/12 |
| X<br>A | US 4 873 871 A (BAI ET AL)<br>* column 1, line 39-61; figures 1-4 *<br>--- | 1,2,7<br>3,4 | |
| X<br>A | DE 30 13 770 A (ROBERT BOSCH GMBH)<br>* page 4, line 24 - page 5, line 21; figures 1,2 *<br>----- | 1,7<br>2 | |
| | | | TECHNICAL FIELDS SEARCHED (Int.Cl.6)<br><br>G01P |

The present search report has been drawn up for all claims

| Place of search | Date of completion of the search | Examiner |
|---|---|---|
| THE HAGUE | 3 February 1997 | Hansen, P |

EPO FORM 1503 03.82 (P04C01)